# EUROPEAN PATENT APPLICATION

(11) **EP 3 100 608 A1**
(43) Date of publication of application: **07.12.2016**
(21) Application number: 14891500.2
(22) Date of filing: 08.05.2014
(51) Int. Cl.: A01K 1/01, A01K 15/00

(54) **POTTY-TYPE DEVICE AND ELECTRONIC SYSTEM FOR MALE DOGS**

(71) Applicant: Vázquez Barcenas, Luis Rodrigo, México, Distrito Federal 03300 (MX)
(72) Inventor: Vázquez Barcenas, Luis Rodrigo, México, Distrito Federal 03300 (MX)
(74) Representative: Grünecker Patent- und Rechtsanwälte PartG mbB
(86) International application number: PCT/MX2014/000068
(87) International publication number: WO 2015/170953

(57) **Abstract**

The invention discloses a urine receiving device from a male dog and an electronic edible awards dispenser system for dogs, the urination device is practical and simple on which the male dogs urinate. The device serves as a receptor of the urine until it is emptied. The electronic system releases awards automatically to a dog that has used the urination device. This device covers the care, hygiene and practicality needs, which are important for the owner and natural needs of the dogs in order to create a harmony in living spaces between the owners and the pets.

## Description

### TECHNICAL FIELD

It is a practical and simple device on which the male dogs urinate, said device serves as a receptor and container of urine until it can be emptied into a suitable place maintaining hygiene, as well as maintaining protection of areas and furniture that they share with their owners.

### BACKGROUND OF THE INVENTION

There will always be owners that do not have adequate space or the necessary possibilities to take the dogs for a walk to urinate in open spaces or green areas. One of the main problems for these owners is to daily and constantly clean the urine runoff in different areas, which is very annoying for different types of materials and surfaces such as furniture, walls, tapestry, curtains, floors, planks, rolling, carpets, etc. and it would be ideal to make it easier, in the most practical and hygienic way possible. Taking into the account the above and based on the physiological needs of male dogs to urinate and instinctively mark their territory especially when they are not puppies anymore, in vertical objects and surfaces, this invention was designed. It is a vertical and inclined receiving portable plastic container, which is being placed on the floor engaging with the surfaces to be protected avoiding the direct runoff of urine.

There are other patents and products in the market and the general differences are the following: they have more than 3 parts, have moving parts, different forms, some of them must be fitted, have metallic parts and for its sizes hinder the passage of people, many of them have grid structures, holes and textures surfaces that are difficult to clean accumulating residues, therefore they are very hygienic, and it cannot be visually determined whether this device was used by the dog, both hands must be used for its manipulation, for its size, flexibility, texture and structure, they are difficult to empty and clean.

Patent DE202006019256 U1/Germany/Orter, Gundula, is impractical because it has 3 parts; a movable clamping handle has metal parts. It is attached to the edge of the toilet and it makes it bulky for the everyday use.

Moreover, the Chinese utility model CN202941247 has 3 pieces, a tray, a mobile deflector having almost the same size and a mesh, this makes it very bulky because of the space it occupies and it is difficult to wash and clean.

Patent application US0120298046 A1 Mikael Havluciyan, like the earlier mentioned patent by the number of pieces, form and sizes makes it impractical.

The international patent application WO2013101546 A1, PCT/US2012/070314 James S. Konges is an electronic audible trainer. This device is activated only with the dog's presence. It does not solve the problem of runoff and hygiene.

The European patent application EP2499906 A1 Frantisek Tomecek has 3 parts; the problem of this device is that it depends on having a strainer available. It is fixedly secured and it makes it impractical and difficult to clean.

U.S. Patent US3230929 A.J.D. Tomas (1963) has 4 parts, a metal mesh cylinder, a lid, a tray and an impractical crosslinked film in every way.

The Chinese utility model CN 201499511 U has 3 detachable parts, one with holes, it is difficult to wash and you cannot know without touching it whether the dog urinated in it.

### BRIEF DESCRIPTION OF THE INVENTION

The present invention consists of one piece device, which is placed on the floor in open areas or is attached to flat surfaces, such as walls or furniture in order to maintain hygiene and to avoid damages by the runoff of the dog's urine. The urine leaks over the bottom part of the device where it is contained in a channel until the owner can empty and rinse it to place it again. In order to strengthen or accustom the dog to this action, it can be rewarded immediately.

### BRIEF DESCRIPTION OF THE DRAWINGS

Figure 1A shows the isometric view of the "Complete" embodiment.
Figure 1B shows the front view of the "Complete" embodiment.
Figure 1C shows the side view of the "Complete" embodiment.
Figure 1D shows the top view of the "Complete" embodiment.
Figure 2A shows the isometric view of the "Flat Half" embodiment.
Figure 2B shows the front view of the "Flat Half" embodiment.
Figure 2C shows the side view of the "Flat Half" embodiment.
Figure 2D shows the top view of the "Flat Half" embodiment.
Figure 3A shows the isometric view of the "Flat Half" embodiment for wall with socle.
Figure 3B shows the front view of the "Flat Half" embodiment for wall with socle.
Figure 3C shows the side view of the "Flat Half" embodiment for wall with socle.
Figure 3D shows the top view of the "Flat Half" embodiment for wall with socle.
Figure 4A shows the isometric view of the "Flat Corner" embodiment.
Figure 4B shows a top isometric view of the Flat Corner embodiment.
Figure 4C shows the side view of the "Flat Corner" embodiment 270.
Figure 4D shows the top view of the "Flat Corner" embodiment.
Figure 5A shows an isometric view of the Socle "Flat Corner" embodiment.
Figure 5B shows the top isometric view of the "Socle Flat Corner" embodiment.
Figure 5C shows the side view of the "Socle Flat Corner" embodiment.
Figure 5D shows the top view of the "Socle Flat Corner" embodiment.
Figure 6A shows the basic parts of the device in general.
Figure 6B shows a common protective flap of devices for flat vertical surfaces.
Figure 6C shows the special cut of the attachment for walls with socle.
Figure 7A shows how the male dog urinates on the device.
Figure 7B shows when the dog performs this action; the owner rewards this behavior as part of the training.
Figure 7C shows how the device is lifted.
Figure 7D shows the action of emptying the urine in a suitable place.
Figure 7E shows how to rinse the device.
Figure 8A shows the location and components of the transmitter module of the attachment "Electronic Awards Dispenser".
Figure 8B shows two fixing pins and urine detection terminals of the transmitter module of the attachment "Electronic Awards Dispenser".
Figure 8C shows the components of the attachment "Electronic Awards Dispenser".
Figure 9A shows a dog urinating on the device.
Figure 9B shows when urine is detected; it sends a radio frequency signal to the Awards Dispenser to activate the release of an award.
Figure 9C shows how you can activate the release of an award by means of a keychain size remote control.

### DETAILED DESCRIPTION OF THE INVENTION

The devices come in different sizes in height from 15 cm to 50 cm depending on the size of the dog; the device is placed within the reach of the dog. One or more devices can be placed according to the diversity of the vertical areas and surfaces to protect, therefore, 5 basic embodiments are shown, and all of them are placed on the floor and depending of the surfaces to be placed. For a better understanding of the different embodiments, reference is made to the following descriptions:

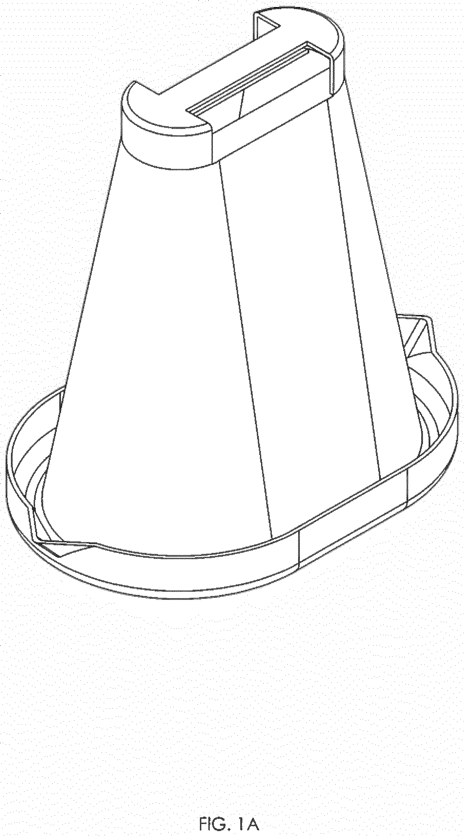

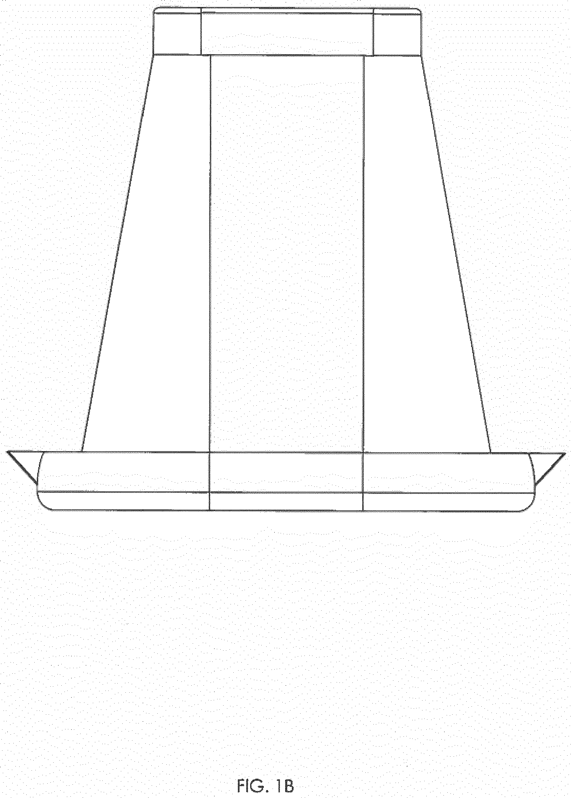

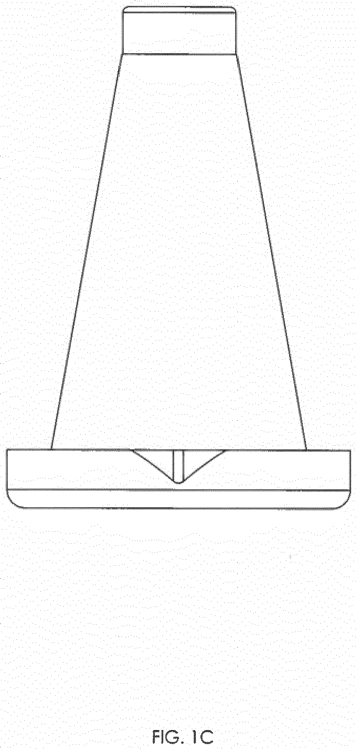

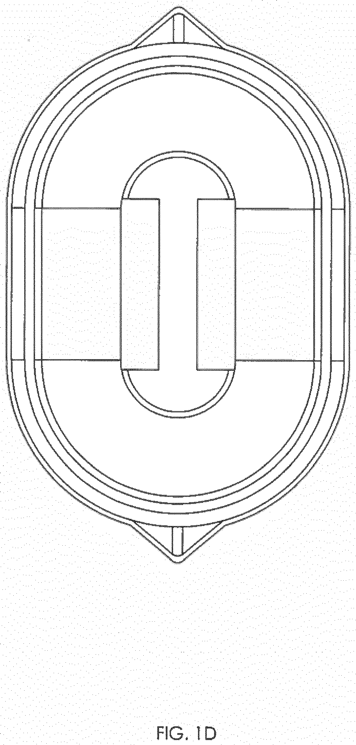

Figure 1A shows a device called "Complete", which is to be placed in the middle of open areas spaces and having a 360-degree coverage. 1B, 1C, 1D are different views of it.

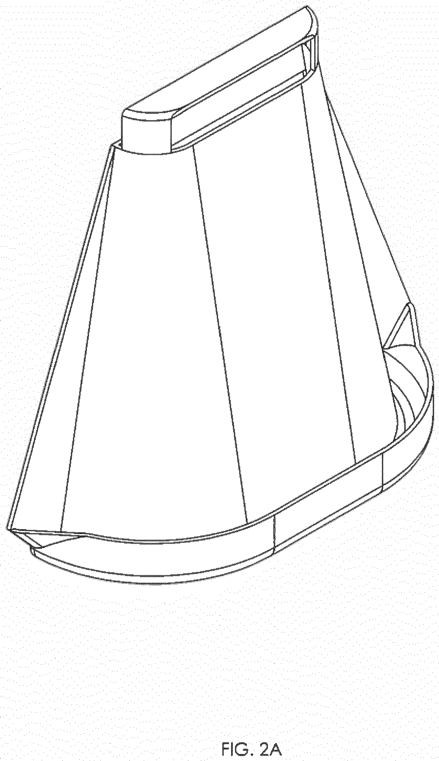

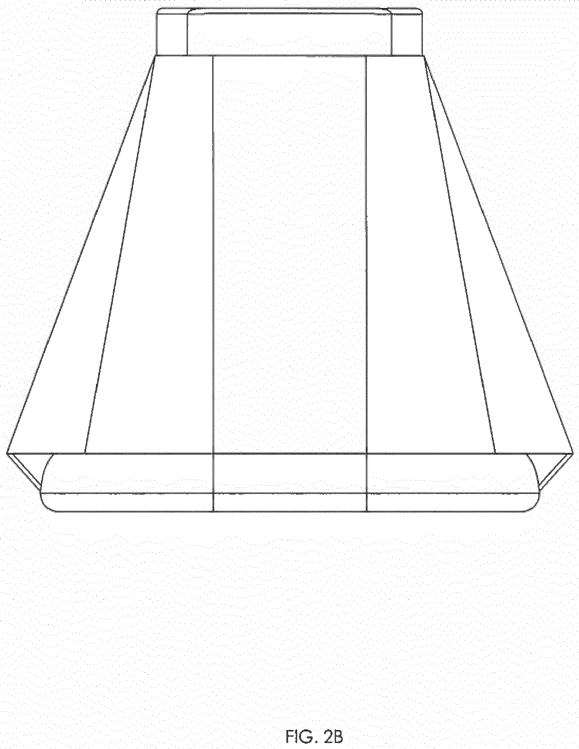

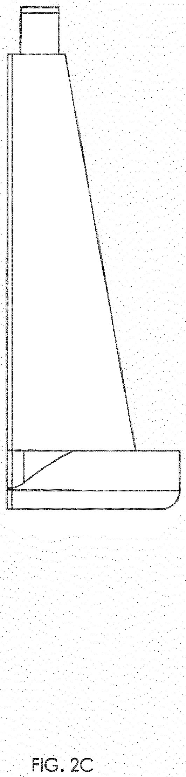

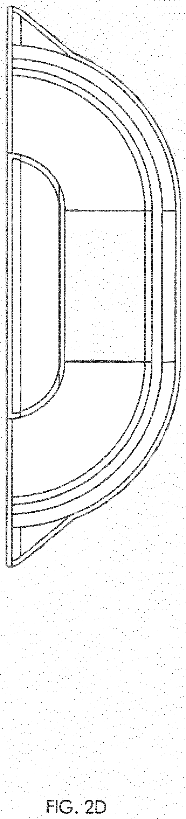

Figure 2A shows the "Flat Half" device having a completely flat surface in order to place it adjacent to vertical surfaces such as walls and furniture.

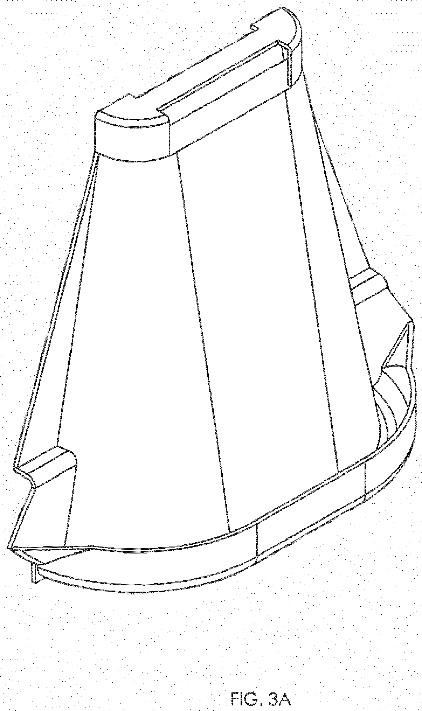

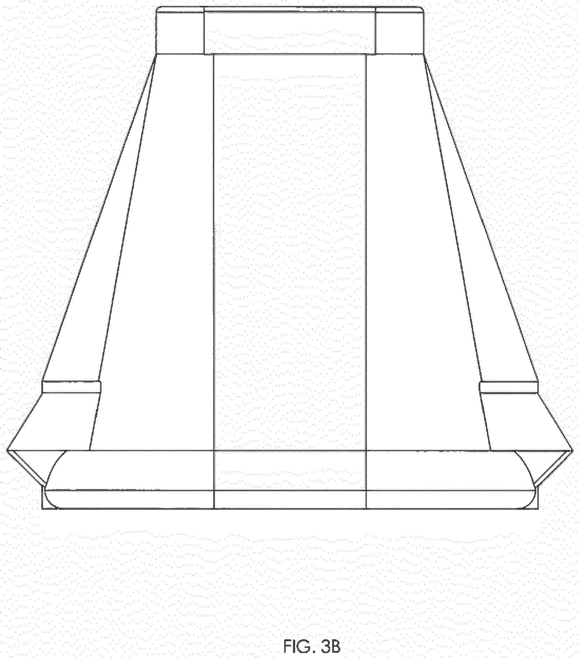

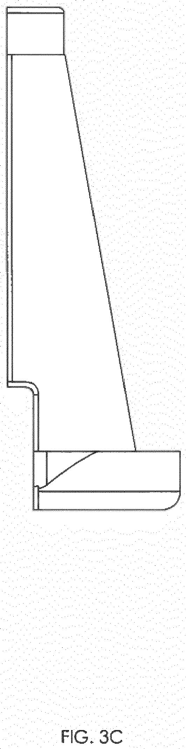

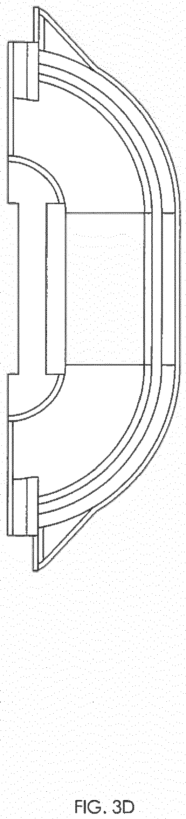

Figure 3A shows the "Socle Flat Half" embodiment, which besides of having a flat surface has a special cut to release the socle commonly used on the walls.

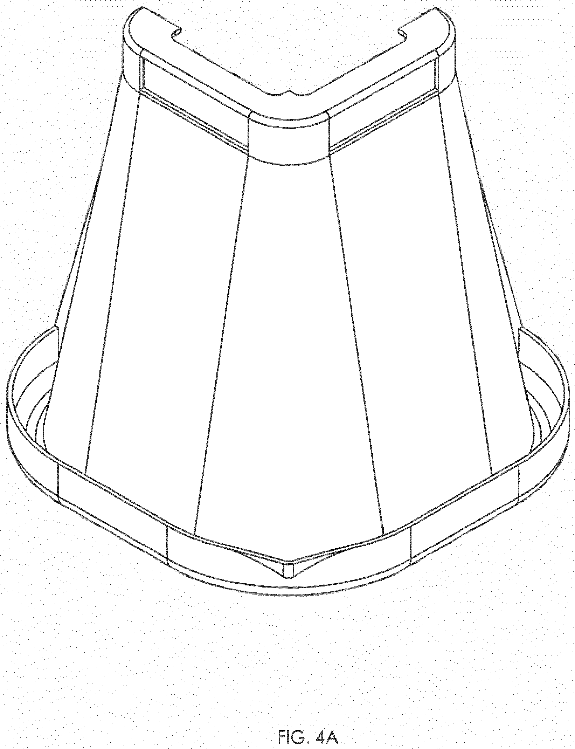

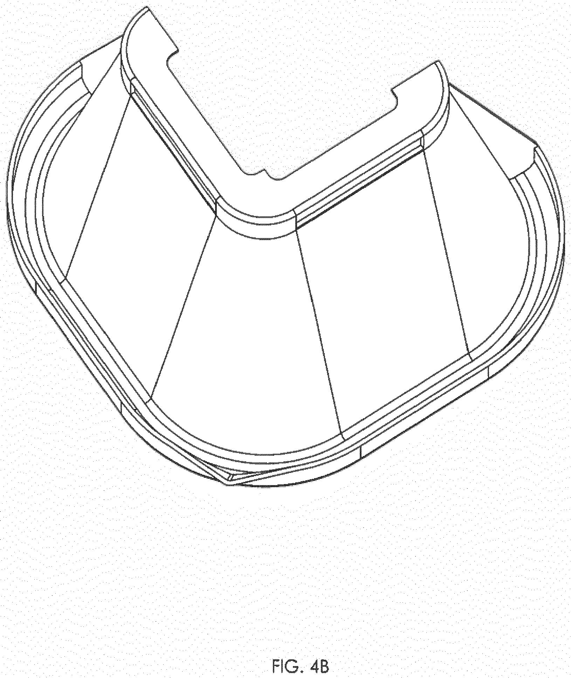

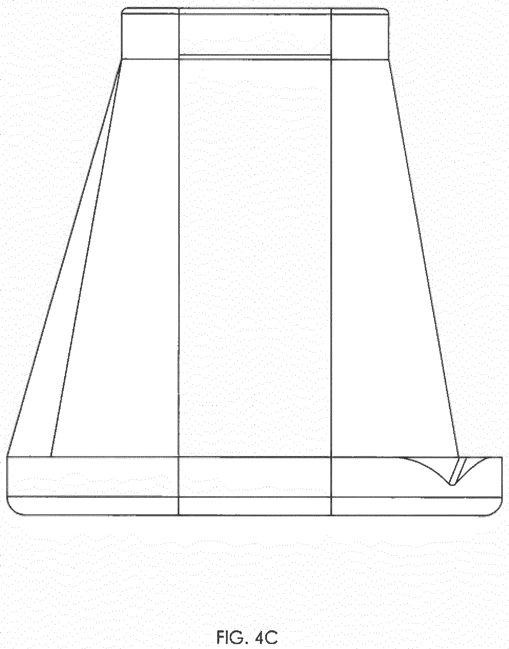

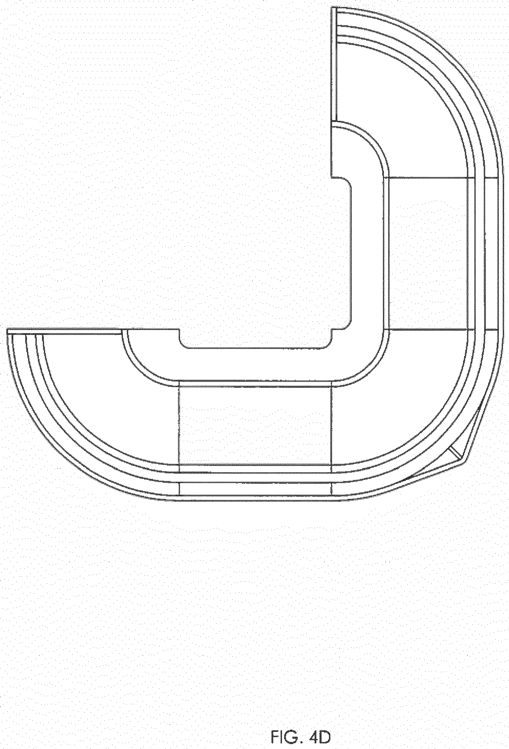

Figure 4A shows the "Flat Corner" embodiment, which has the characteristic of having a 90-degree cut so it can be coupled to wall corners so that it can be attached to walls or furniture.

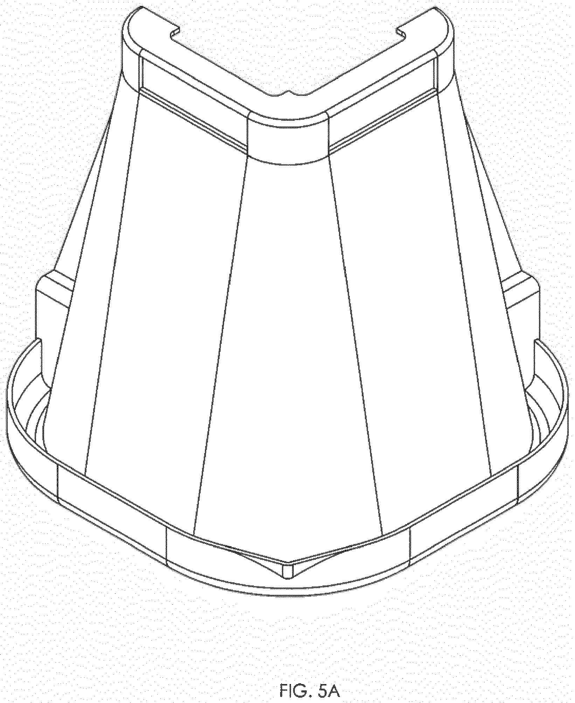

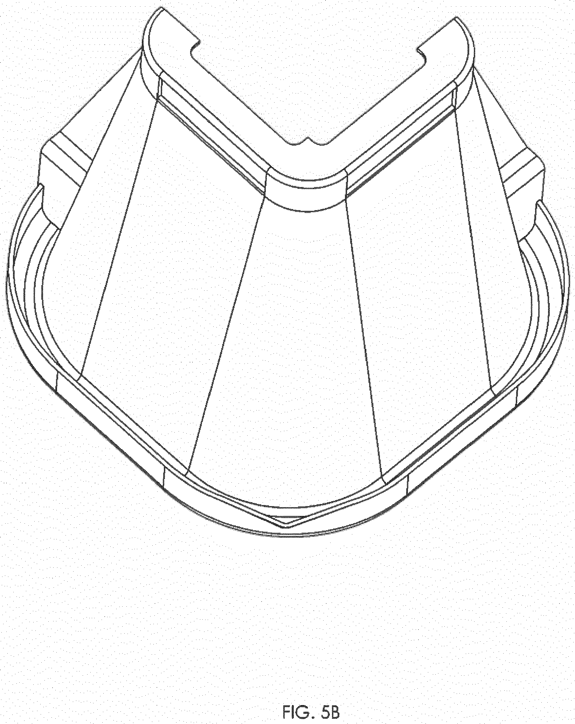

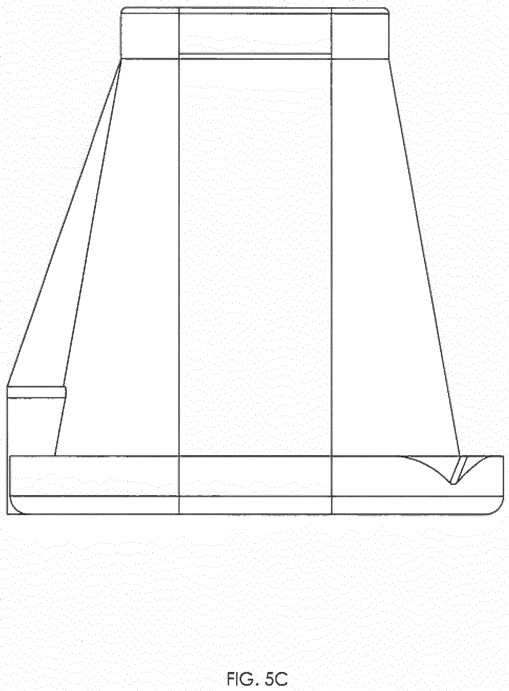

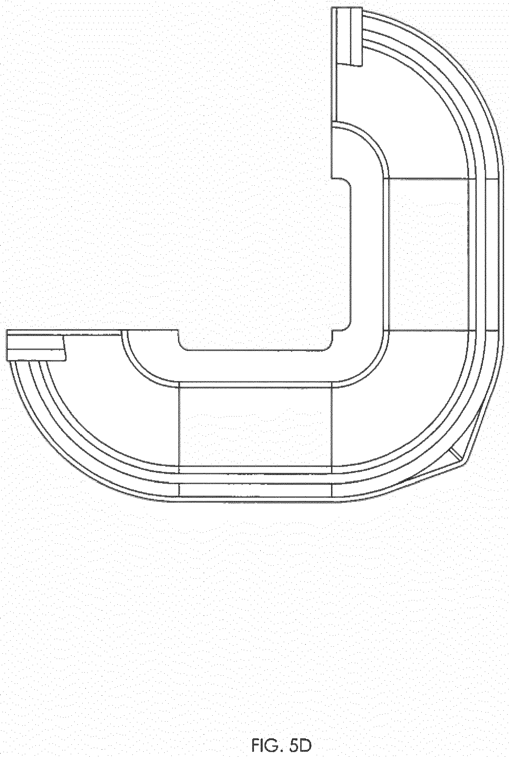

Figure 5A shows the "Socle Flat Corner" embodiment, this embodiment besides of having a 90-degree cut and placed in the corners of the walls, has a cut to fit to walls with the socle.

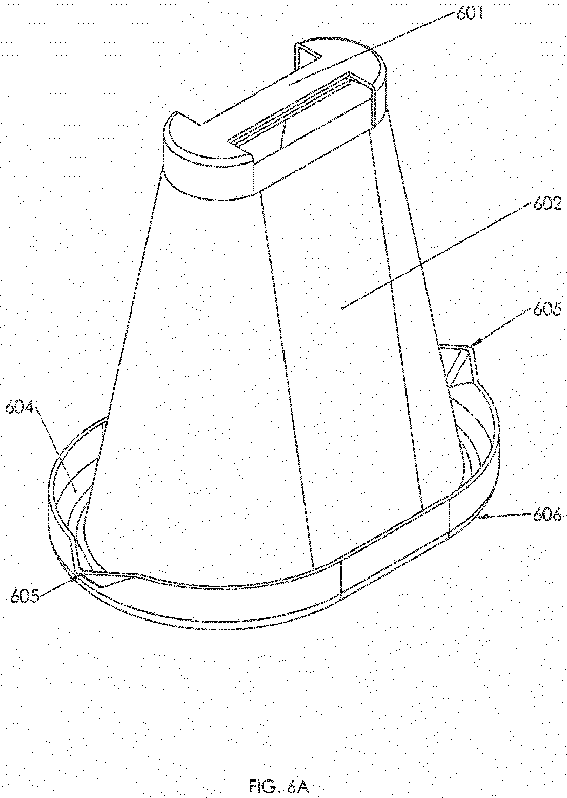

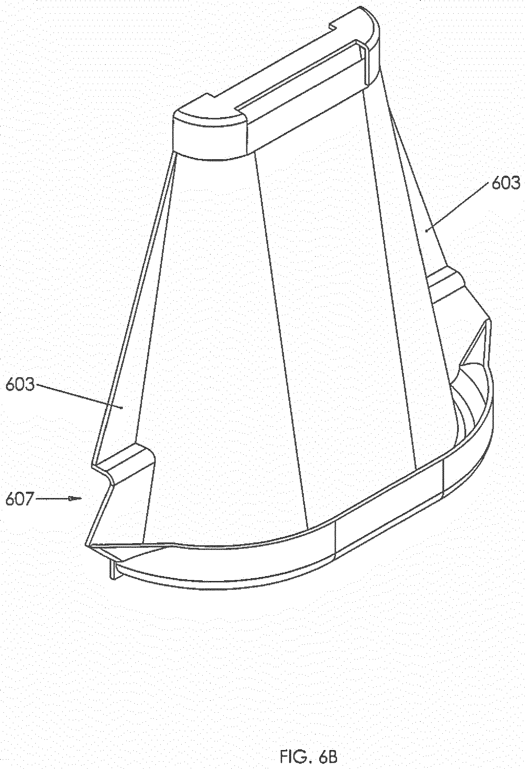

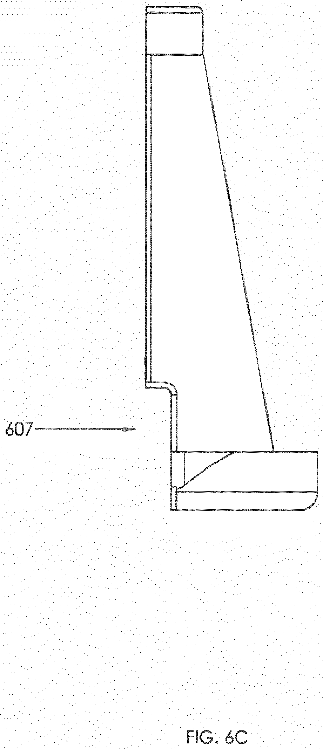

In Figure 6A, the basic parts making up the device are shown, which comprises at the top, an integrated and rigid clamping handle for its manipulation (601). A smooth inclined surface of runoff over which the dog urinates (602). A urine containment channel (604), on both sides it has a drain for the controlled delivery of urine (605). The base of the device is always placed on the floor (606). The embodiments to be placed adjacent to vertical surfaces feature a protective edge (603). For embodiments of wall with socle there is a specific cut to release it (607).

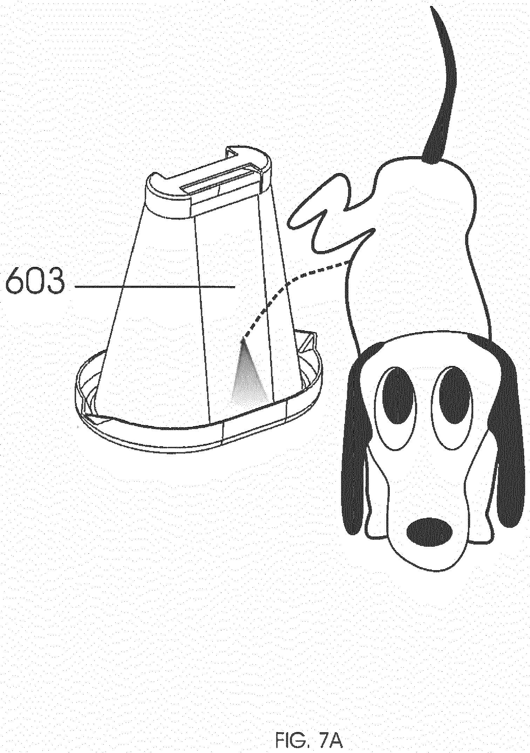

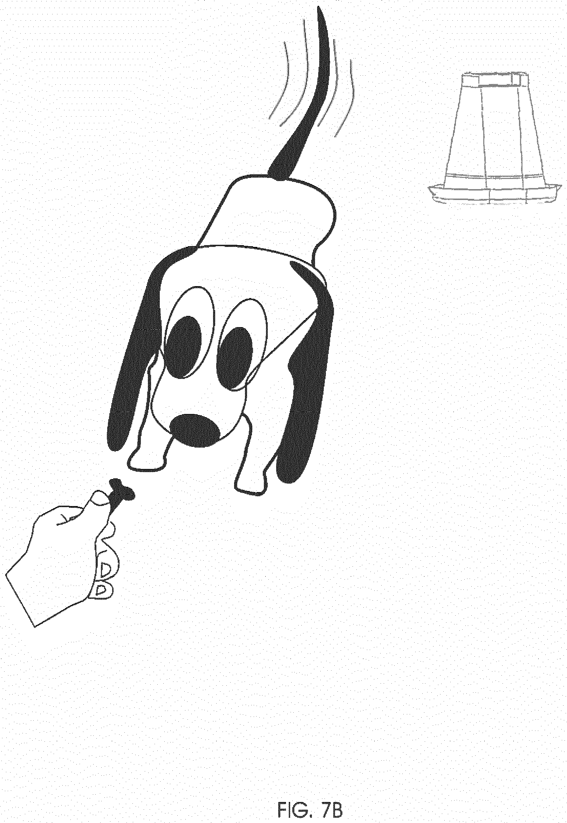

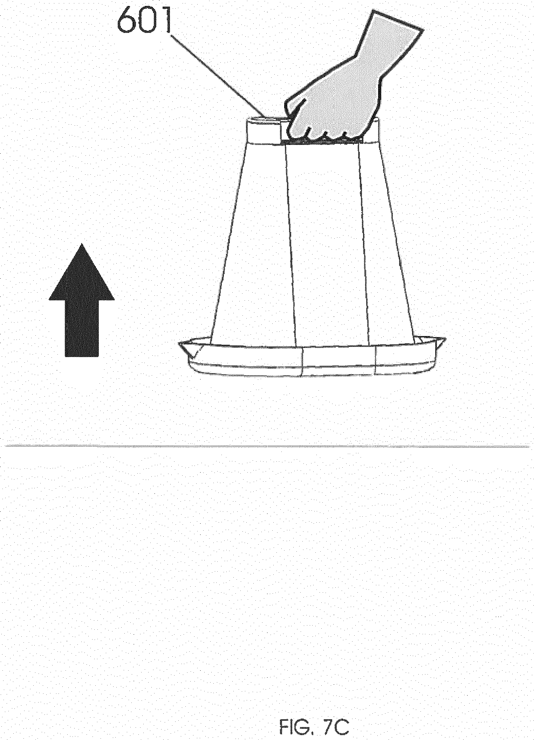

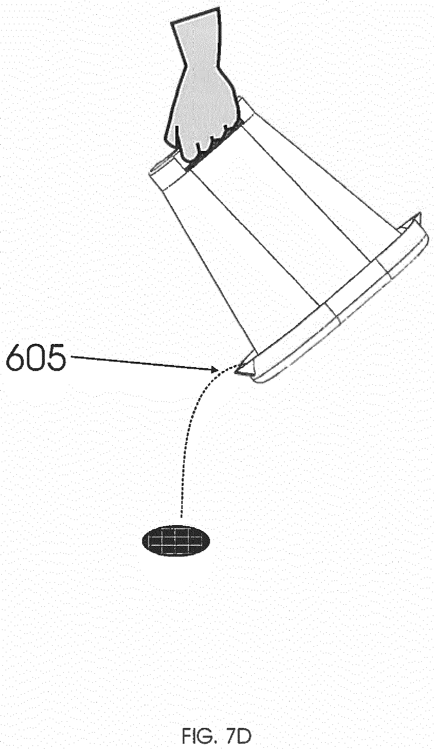

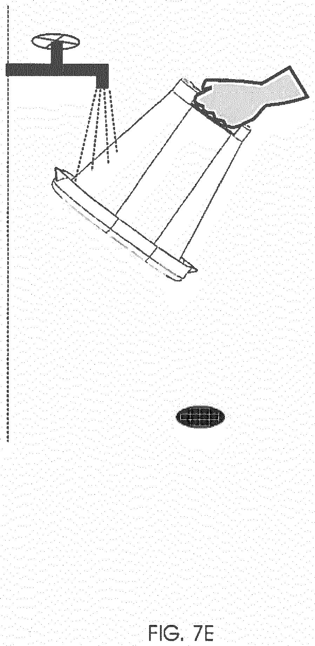

Usually, when dogs detect a new element in their environment, they mark it with urine (Figure 7A), to reinforce this behavior based on the known theory "Pavlov Conditioning" for urinating on the device, they are given an award immediately (Figure 7B). The urine drains into the bottom where there is a contention channel preventing scattering thereof. The owner can visually note that it was urinated without the need to touch the device by noting the accumulation of urine in the channel or because the dog asks his usual award. The owner, by holding the clamping handle, vertically raises the device (Figure 7C) taking care not to spill the urine, moves it to empty in the location considered appropriate (Figure 7D). Afterwards, it is simply flushed with water (Figure 7E) and put it back in the same place or in another, as some dogs like to find different places to urinate.

As mentioned above, in order to train and accustom the dog to urinate on the device, it must be given an award immediately for this action, but the owner is not always available. Therefore, an attachment called "Electronic Awards Dispenser" was created, that serves to reward the dog automatically,

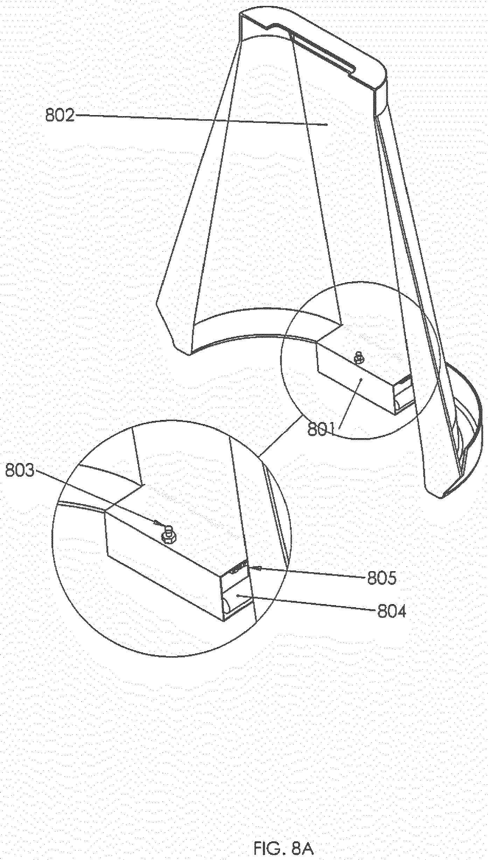

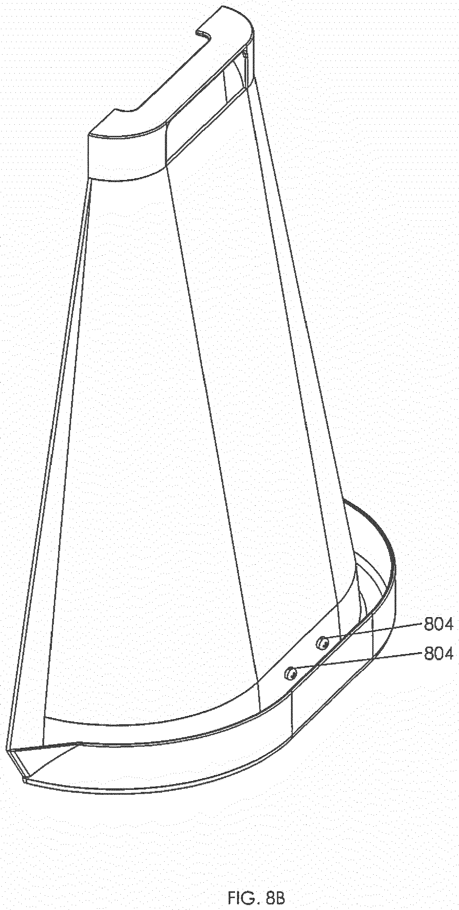

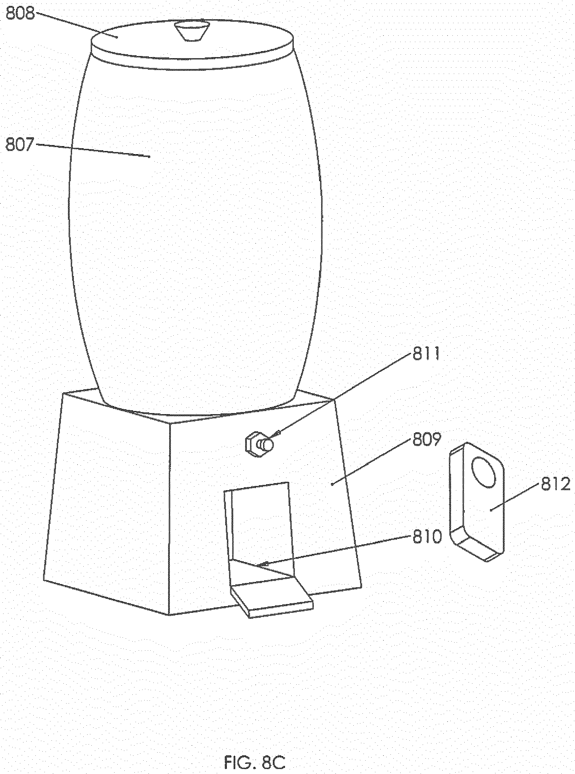

Figure 8A shows the elements of which the attachment "Electronic Awards Dispenser" consists, the first element is the radio frequency transmitter module comprised by a small compact plastic box with an electronic circuit (801) which is fixed by a stainless pin which, in turn, serves as terminals to detect the liquid of the urine through the electrical conduction, the head of the pin is located in the lower inner part of the contention channel (804), this module can be adapted to any the above mentioned embodiments. This transmitter module has a reset button (803). A compartment for 23A 12V type batteries (804) is also included as well as a 4-position slide switch (805) (DipSwitch) to set different combinations of frequencies. An electronic circuit integrated with the following functions: detecting the presence of the liquids through the terminal pins, sending a radio frequency signal delay of 6-12 seconds to the Electronic Awards Dispenser and disabled until it is reset by the reset button.

The Electronic Awards Dispenser consists of translucent plastic container (807) with a lid (808), to be filled with awards for the dog, a plastic base (809) with an outlet conduit of awards (810), a manual release action button (811), the base contains therein a release mechanism of the awards actuated by a receiver electronic circuit of radio frequency which triggers the release mechanism of awards, with a 4-position slide switch to synchronize the same frequency as the transmitter module. Its power source is from the batteries or from a power converter. It further comprises a keychain size remote control (812).

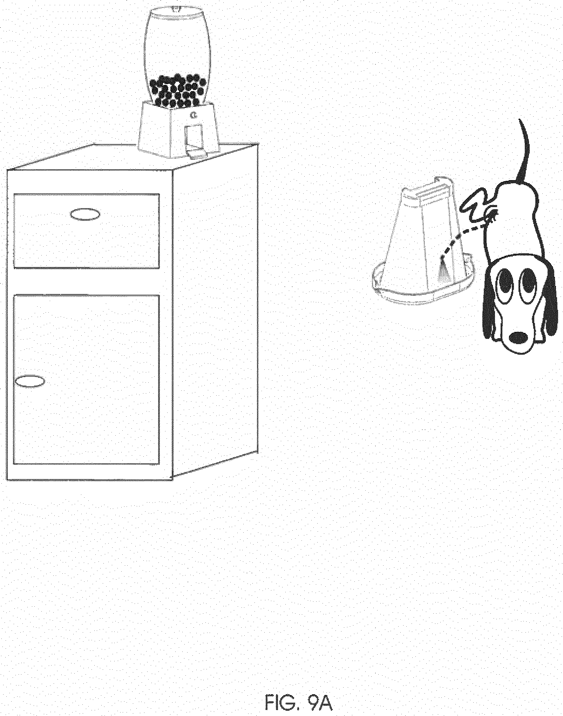

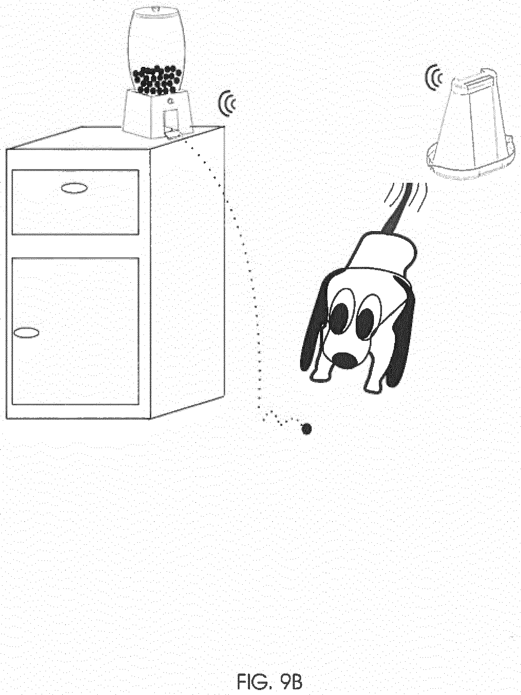

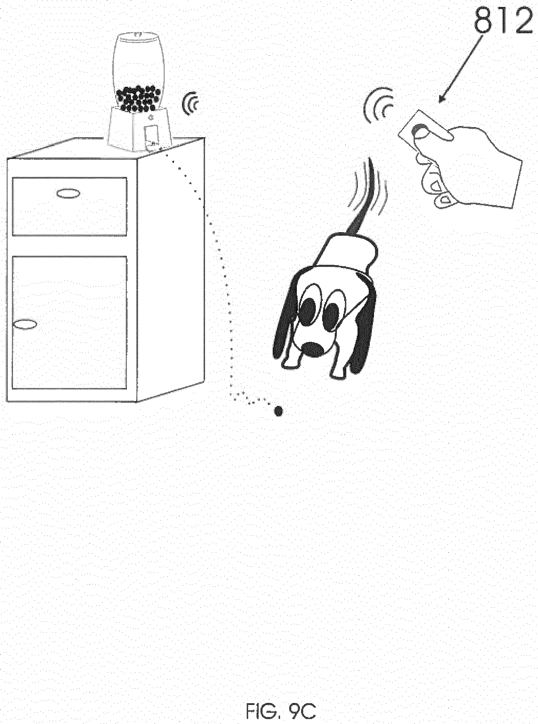

The attachment "Electronic Awards Dispenser", when the dog urinates on the device (Figure 9A), the electronic transmitter module detects the accumulation of urine in the contention channel and with delays of some seconds for the dog to finish urinating. It quietly sends a wireless radio frequency signal to the "Electronic Awards Dispenser" which is located within a short distance and in a high place so that it is not available to the dog. When receiveing the signal from the transmitter, it electronically activates the release awards mechanism, releasing and dropping an award (Figure 9B). The "Electronic Awards Dispenser" can also be operated manually by a release button located on the front in the same dispenser (801) or with a wireless keychain size remote control (812). The transmitter module is disabled for not sending more signals until it is reset via the reset button (803) after being rinsed.

The Electronic Awards Dispenser can be activated by receiving signals from different urinals programmed with the same radio frequency channel or can be used independently or to reward the dog for any other action by the manual button or the keychain size remote control.

## Claims

1. A plastic resin device, manufactured in one piece which has the function of serving as an urinal for male dog, portable, practical and easy, the device comprising:
a smooth runoff surface;
a contention channel to receive the urine of the dog;
a rigid handle integrated in the top of the device;
a drain to control and direct the emptying of the urine in a specific point.

2. The urination device for a male dog according to claim 1, wherein the device is made of a plastic and very light material.

3. The urination device for a male dog according to claim 1, wherein the device has different sizes depending on the breed and size of the dog that will use it, oscillating from 15 to 50 cm high.

4. The device for a male dog according to claim 1, wherein the design of the device occupies the minimum necessary space.

5. The device for a male dog according to claim 1, wherein the device allows to visually determine, without touching the device, to see that the device was used by the dog, since the contention channel is not covered, leaving it visible.

6. The device for a male dog according to claim 1, wherein the device has different coupling shapes to vertical surfaces,

7. An electronic system awards dispenser actuated wirelessly, automatically giving to a dog an award when the dog uses the urination device according to the claim 1 , the system comprising:
a plastic translucent container provided with a lid to be filled with edible awards for dog;
a plastic base with an outlet pipe of awards;
an action manual releasing button;
a releasing awards mechanism contained within the base;
a transmitter module for the radio frequency signal;
a receiver module of radio frequency signal;
an electronic circuit that activates the release mechanism by a radio frequency receiver with a 4-position slide switch to synchronize the same frequency that the transmitter module, and
a battery power source or a current converter.

8. The electronic system awards dispenser according to claim 7, wherein the dispenser can be further manually activated giving an award to the dog.

9. The electronic system awards dispenser according to claim 7, further comprising a keychain size remote control to activate the electronic awards dispenser.
